**Europäisches Patentamt**

**European Patent Office**

**Office européen des brevets**

(19)

(11) Veröffentlichungsnummer: **0 217 344 B1**

(12) **EUROPÄISCHE PATENTSCHRIFT**

(45) Veröffentlichungstag der Patentschrift:
28.11.90

(51) Int. Cl.⁵: **B01D 19/00, F02C 7/06, F16N 39/06, F01D 25/18**

(21) Anmeldenummer: 86113381.7

(22) Anmeldetag: 29.09.86

(54) Versorgungssystem von Lagern.

(30) Priorität: 02.10.85 DE 3535107

(43) Veröffentlichungstag der Anmeldung:
08.04.87 Patentblatt 87/15

(45) Bekanntmachung des Hinweises auf die Patenterteilung:
28.11.90 Patentblatt 90/48

(84) Benannte Vertragsstaaten:
DE FR GB IT

(56) Entgegenhaltungen:
DE-A- 3 137 947
DE-A- 3 242 366
FR-A- 2 263 804
FR-A- 2 299 898
US-A- 2 779 435
US-A- 2 888 097
US-A- 3 378 104
US-A- 4 414 006

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Lorenz, Joachim, Eschenstrasse 5, D-8061 Riedenzhofen(DE)**
Erfinder: **Gattinger, Martin, Eschenstrasse 5, D-8062 Eichenhofen 20 1/2(DE)**

ACTORUM AG

## Beschreibung

Ein dem Oberbegriff des Patentanspruchs 1 zugrunde gelegter und aus der US-A 2, 779, 435 bekannter Öl-Luftabscheider, z.B. für ein Gasturbinentriebwerk, weist ein in dessen Zentralbereich unmittelbar als Bestandteil einer Hohlwelle für die Entlüftung auf dieser aufsitzendes, radiale Schaufeln, und damit betreffende Kanäle untereinander einschließendes Schaufelrad auf. Dabei weist die Hohlwelle im zentralen Bereich des Schaufelrads verhältnismäßig groß bemessene Durchtrittsöffnungen für die Entlüftung bzw. Luftabfuhr auf; im bekannten Fall soll ferner das bei Rotation an den Schaufeln haften bleibende Öl durch Zentrifugalkraftwirkung radial nach außen in eine Gehäusekammer abgeschleudert werden. Ein derartiger Öl-Luftabscheider verlangt vergleichsweise hohe Drehzahlen für das Schaufelrad sowie einen vergleichsweise großen Differenzdruckaufbau gegenüber der Atmosphäre (Entlüftungsseite); es müssen mithin vergleichsweise hohe Leistungseinbußen für den Antrieb des Schaufelrads, z.B. seitens des Gasturbinentriebwerks, in Kauf genommen werden; dies gilt auch im Hinblick auf eine festigkeitsmäßig auf die hohen Drehzahlen abzustimmende, vergleichsweise gewichtlich schwere Bauweise des betreffenden Laufrads.

Aus der DE-A 3 242 366 wie aber auch aus der DE-A 3 137 947 sind Ölversorgungssysteme für Gasturbinentriebwerke bekannt, die im Hinblick auf extreme Fluglagen, also auch bei "Überkopflagen," in sich "überlappender Weise" über jeweils für sich funktionsfähige Öl-Kreislaufsysteme, also auch in den extremen Fluglagen eine einwandfreie Öl-Versorgung sicherstellen sollen. Lediglich als allgemein bekannt zu erachtende und aus den betreffenden beiden Druckschriften entnehmbare Komponenten und Führungsweisen des Fluids bzw. Öls bei Ölkreislaufsystemen von Gasturbinentriebwerk finden insoweit ihren Niederschlag im Rahmen des Oberbegriffes des Patentanspruchs 1. Dabei läßt das Versorgungssystem nach der DE-A 3 242 366 ferner lediglich den Hinweis auf einen als allgemein bekannt zu erachtenden Öl-Luftabscheider (dem Abscheider nachgeschaltetes Schaufelrad, zentrale Entlüftung) zu; insoweit dürfte auch dieser "Zentrifugalabscheider" mit den schon zur US-A 2, 779 435 erwähnten nachteilhaften Kriterien hinführen, die vorrangig aus dem Betrieb mit vergleichsweise hoher Drehzahl resultieren.

Im bekannten Fall nach der DE-A 3 137 947 soll das vom Verbraucher (Lager) zurückströmende Öl-Luftgemisch u.a. durch eine gehäuseartig gefaßte, in einer Kammer enthaltene netzartige poröse Füllstoffmasse (im Sinne einer sogenannten "Retimet-Packung") hindurchgeführt werden; unter örtlich achszentraler Entlüftung soll das Öl über in der Gehäuseeinfassung, außen, enthaltene Bohrungen aus der Kammer nebst Packung in eine äußere stationäre Gehäuseschnecke unter Aufprägung einer rotatorischen Bewegung abgeschleudert werden. Diese Anordnung läßt vergleichsweise hohe Druckverluste erwarten, die an anderer Stelle im Versorgungssystem durch besondere Maßnahmen, wie zusätzliche Pumpen, kompensiert werden müssen.

Aufgabe der Erfindung ist es, ein Schmiermittelversorgungssystem gemäß Oberbegriff des Patentanspruchs 1 anzugeben, bei dem die Ölabscheidung aus dem Luft-/Ölgemisch auch unter kleinen Druckdifferenzen (Δp), z.B. gegen Atmosphäre, sicher betrieben werden kann, ohne nennenswerte Leistungseinbußen in Kauf nehmen zu müssen.

Gelöst wird diese Aufgabe durch die im Kennzeichen des Anspruchs 1 aufgeführten Merkmale. Weitere Merkmale sind den Unteransprüchen der Beschreibung und Zeichnung eines Ausführungsbeispiels zu entnehmen.

Die wesentlichsten Vorteile der Erfindung sind:

Durch die Verwendung eines Pumpenrades bei dem sowohl Zentripetal- als auch Zentrifugalkräfte für die Gemischtrennung ausgenutzt werden können, ergeben sich sehr geringe Ölleckagen und kleine Abmessungen für das Pumpenrad. Insbesondere kommt man dabei mit Radialkanälen aus, was eine Absenkung der Drehzahlen in erheblichem Umfange ermöglicht. Reibungsverluste sind dadurch ebenfalls vermindert.

Durch die spezielle Halterung einer Packung die die Trennung von Luft und Öl erleichtert, ergibt sich, daß das Restöl aus dem Kreislauf schon an der Siebtrommel abgetrennt wird, zumindest aber an der Außen-Oberfläche der Packung und von dort zurückgeschleudert wird, während die praktisch ölfreie Luft zentral abgeführt wird und über Bord strömt.

Durch die Konstruktion der trommelartigen Umwandung (Siebtrommel) und der speziellen Halterung der Packung darin, wie dargestellt, ergibt sich der Vorteil, daß der Öl-Luftabscheider mit sehr geringen Druckverlusten und sehr niedriger Drehzahl (bis unter 10 000min-l) sicher betrieben werden kann. Auch bei sehr geringem, d.h. gegen Null gehendem Überdruck in dem Raum in dem der Öl-Luftabscheider arbeitet bzw. ansaugt, ist dieser wirksam.

Das vorliegende Versorgungssystem ist nicht auf das dargestellte Ausführungsbeispiel beschränkt, insbesondere nicht auf die dargestellten und beschriebenen Dimensionen bezüglich des Pumpenrades. Ist eine bestimmte Nennleistung erreicht, bzw. wird eine größere gewünscht, so ist selbstverständlich eine entsprechend angepaßte größere Ausgestaltung der Dimensionen des Pumpenrades erforderlich.

In den beigefügten Zeichnungen sind Ausführungsbeispiele rein schematisch dargestellt, wobei sich die Darstellungen auf die wesentlichen Teile des Öl-Luftabscheiders beschränken, während im übrigen auf das Versorgungssystem gemäß der DE-A 3 242 366 und dessen Beschreibung und Darstellung eines Ausführungsbeispiels Bezug genommen wird, weil der vorliegende Öl-Luftabscheider auch Teil dieses Systems sein kann, bzw. umgekehrt, dieses System übernommen und mit dem vorliegenden Abscheider ausgestattet werden kann, was zu einer weiteren Verbesserung des Gesamtwirkungsgrades und zur Erhöhung der Sicherheit im Betrieb eines Triebwerks beiträgt.

In der Zeichnung zeigen:

Fig. 1 einen Längsschnitt eines Öl-Luftabscheiders mit dem Pumpenrad und mit in seiner Hohlwelle enthaltener poröser Packung,

Fig. 2 einen Abschnitt einer Siebtrommel zur Halterung der porösen Packung,

Fig. 3a eine seitliche Umfangsansicht einer Pumpenradhälfte,

Fig. 3b eine von vorn gesehene, linke, die Anordnung rechteckiger Radialkanäle verdeutlichende Schnitthälfte eines Pumpenrades nach Fig. 3a,

Fig. 4a eine von Fig.3a abweichende Ausführungsform des Pumpenrads, bezüglich oberer Hälfte als seitliche Umfangsansicht und bezüglich unterer Hälfte als Längsschnitt dargestellt, hier unter Verdeutlichung von Radialkanälen mit kreisförmigem Querschnitt,

Fig. 4b eine von vorn gesehene, linke, die Anordnung kreisförmiger Radialkanäle verdeutlichende Schnitthälfte des Pumpenrads nach Fig. 4a.

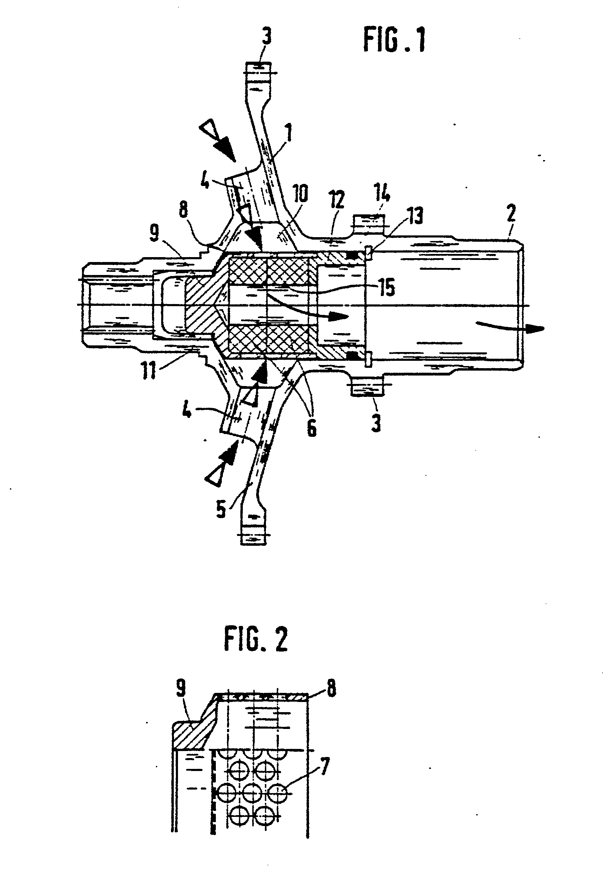

Das aus Fig. 1 ersichtliche Pumpenrad 1 ist einstückig mit einer Hohlwelle 2 ausgebildet, die z.B. bei 3 einen Zahnkranz zum Antrieb der Einheit aufweist. Der Zahnkranz 3 kann auch am äußersten Umfang des Pumpenrades 1 alternativ hierzu angeordnet sein. Das Pumpenrad 1 weist radiale Kanäle 4 auf und eine schild- oder scheibenartige Rückwand 5, die der Ölrückführung dienlich ist. Die Kanäle 4 dienen dazu, von außen nach innen von Öl-Luftgemisch durchströmt und von innen nach außen - entlang der Rückwand 5 - von Öl durchströmt zu werden.

Die Luft wird aus dem Gemisch abgeschieden, im wesentlichen aus der äußeren Oberfläche einer Packung 6, die porös, insbesondere schwammartig, ausgebildet ist, so daß sie Luft durchläßt, während das Öl aus relativ großen Öffnungen 7 in der Umwandung 8 einer Siebtrommel 9 austritt und beim Umlauf des Pumpenrades 1 zentrifugal nach außen geschleudert und direkt in den Kreislauf rückgeführt wird. Das Öl durchläuft dabei einen umfänglichen oder ringförmigen Sammelraum 10, zwischen der Siebtrommel 9 und der entsprechend erweiterten Innenwand der Hohlwelle 2 in diesem Bereich. Die Siebtrommel ist bei 11 in die Hohlwelle 2 eingesetzt und hält die Packung 6 axial unverrückbar fest mit Hilfe eines topfartigen Teils 12, der mit einem Sicherungselement 13 axial festgehalten ist und bei 14 abgedichtet ist. Durch diese Art des Einbaues wird die Porosität des schwammartigen Packungsmaterials voll ausgenutzt und der Luftdurchsatz ungehindert möglich, so daß die Luft zentral durch die Hohlwelle 2 - in Fig. 1 nach rechts - als Entlüftungskanal über Bord führbar ist. Die schwammartige Packung 6 ist zu diesem Zweck ringförmig ausgebildet und weist eine zentrale freie Luftaustrittsoberfläche 15 im wesentlichen in Form eines zylindrischen Innenmantels auf. Die Porosität des schwammartigen Packungsmaterials wird so gewählt, daß Öl dieses praktisch nicht durchdringen kann. Dagen soll die Umwandung 8 der Siebtrommel 9 relativ große öffnungen 7 aufweisen, um das Öl von der äußeren Oberfläche der Packung 6 leicht und schnell abschleudern zu können. Es hat sich gezeigt, daß die die Packung 6 umgebende Umwandung 8 mit den Öffnungen 7 einen freien Gesamtdurchströmquerschnitt von mindestens einem Drittel der gesamten Oberfläche des Teils aufweisen sollte.

Der Sammelraum 10, der die Siebtrommel 9 umgibt, sollte ein größeres Volumen als die Packung 6 aufweisen. Dies ist den Zwecken des vorliegenden Versorgungssystems besonders förderlich.

Wenn das Pumpenrad 1 Radialkanäle 4 aufweist, deren Länge zum Außenradius im Verhältnis von 1:2 oder kleiner ausgebildet ist, hat sich eine besonders günstige Ölabscheidung ohne nennenswerte Druckverluste und Leistungseinbußen bestätigt.

Wenn der innere Querschnitt der Bohrung in der Packung 6, d.h., der von der ringförmigen Packung eingeschlossene zylindrische Innenmantel eine Luftaustrittsfläche von mindestens 20% des Querschnitts der Hohlwelle 2 aufweist, ergibt sich ein guter Strömungsübergang und Abfluß (Entlüftung), so daß hierdurch Druckverluste weiter vermindert werden.

Die Erfindung schafft ein System der Öl-Luftabtrennung, das bei sehr niedriger Drehzahl und sicher betrieben werden kann. Es ist deshalb insbesondere als Versorungssystem mit einem Ölkreislauf für Gasturbinenstrahltriebwerke von Flugzeugen bestens geeignet.

Insbesondere die Radien des Pumpenrads und die Kanallängen und /oder -querschnitte müssen bei gewünschten Leistungsänderungen entsprechend den angegebenen Verhältnissen geändert werden.

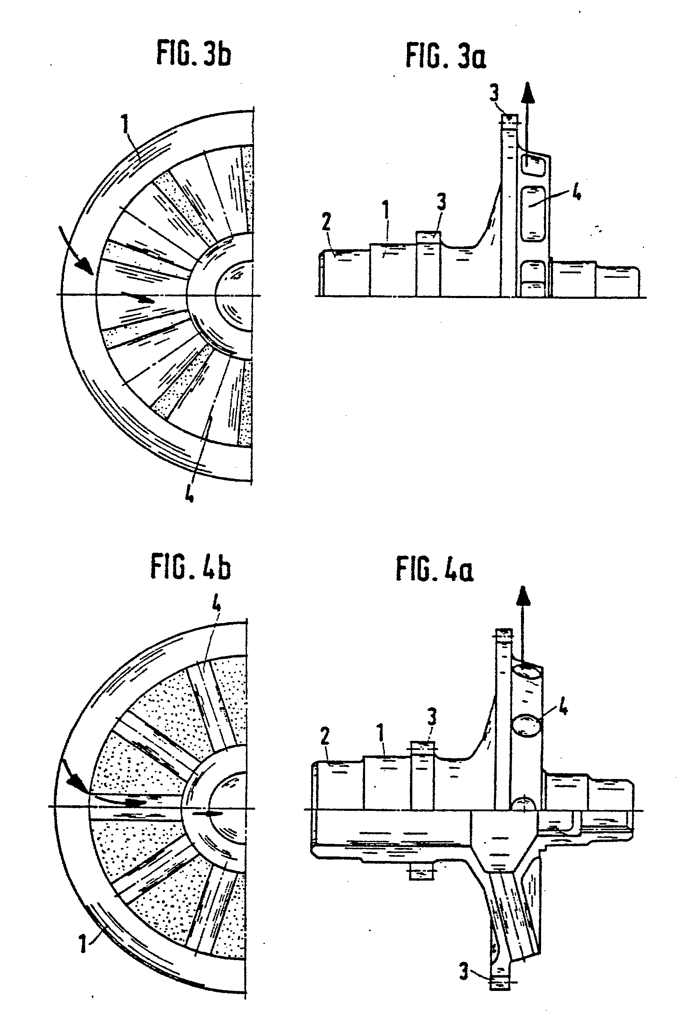

Fig. 3a und 3b zeigen Radialkanäle 4 in einem Pumpenrad 1, die einen relativ großen rechteckigen Querschnitt aufweisen.

Fig. 4a und 4b zeigen Radialkanäle 4 mit kreisförmigem Querschnitt in einem ähnlichen Pumpenrad 1.

Die Pfeile zeigen (links) den Gemischeintritt in das Pumpenrad 1, von außen nach innen in die Radialkanäle 4, die über dem Umfang gleichmäßig verteilt (beabstandet) sind.

Auch die Anzahl der Kanäle kann einer gewünschten anderen Nennleistung oder Drehzahl oder ΔP, angepaßt werden. Das Abschleudern von Öl zeigen die Pfeile (rechts) radial nach außen.

## Patentansprüche

1. Versorgungssystem von Lagern, Wellen und dergleichen Verbraucher eines Gasturbinentriebwerks, insbesondere Versorgungssystem mit einem Ölkreislauf für ein Gasturbinenstrahltriebwerk von Flugzeugen, bei dem ein Fluid, wie Öl, einem Verbraucher des Triebwerkes zugeführt wird, dem abgesaugtes Öl-Luft-Gemisch einem Öl-Luftabscheider zugeführt wird, in dem das Gemisch über zugehörige Radialkanäle (4) eines Pumpenrades (1) radial nach innen zugeführt und das Öl durch Zentrifugalkräfte am Pumpenrad (1) abgeschieden und in den Kreislauf rückgeführt wird, worin das Pumpenrad (1) in einem zentralen Bereich mit einer Hohlwelle (2) entlüftungsseitig in Verbindung steht, dadurch gekennzeichnet, daß im zentralen Bereich des Pumpenrads (1) eine poröse luftdurchlässige Packung (6) mit im Verhältnis zum Packungsvolumen großer Oberfläche angeordnet ist, die an der Innenseite über die Hohlwelle (2) entlüftet ist, und die an der Außenseite über eine von im Verhältnis zur Packungsporosität große Öffnungen (7) enthaltende trommelartige Umwandlung (8) mit einem Sammelraum (10) des Pumpenrads (1) in Verbindung steht, in den die Radialkanäle (4) einmünden, mit denen das aus dem gegen die Packung (6) geförderten Öl-Luft-Gemisch abgeschiedene Öl von der Umwandungs- und Packungsoberfläche aus nach außen zentrifugiert und aus den Kanälen rückgeführt wird.

2. Versorgungssystem nach Anspruch 1, dadurch gekennzeichnet, daß die Packung (6) ringförmig ausgebildet ist und mit einer zentralen, freien Luftaustrittsoberfläche (15) im wesentlichen in Form eines zylindrischen Innenmantels, mit dem Entlüftungskanal der Hohlwelle (2) verbunden ist.

3. Versorgungssystem nach Anspruch 1 oder 2, dadurch gekennzeichnet, daß die Packung (6) aus einem Material besteht, das schwammartig und luftdurchlässig ist und lediglich axial durch Einbauten in der Hohlwelle (2) gehalten ist.

4. Versorgungssystem nach einem der vorhergehenden Ansprüche, dadurch gekennzeichnet, daß die die Packung (6) umgebende Umwandung (8) mit den Öffnungen (7) einen freien Gesamtdurchströmquerschnitt von mindestens einem Drittel der gesamten Oberfläche des Teils ausbildet.

5. Versorgungssystem nach einem der vorhergehenden Ansprüche, dadurch gekennzeichnet, daß der im Pumpenrad (1) ausgebildete Sammelraum (10) ein größeres Volumen als die Packung (6) aufweist.

6. Versorgungssystem nach einem der vorhergehenden Ansprüche, dadurch gekennzeichnet, daß die Kanäle (4) bezüglich jeweiliger Kanallänge zum Außenradius im Verhältnis von 1:2 oder kleiner ausgebildet sind.

7. Versorgungssystem nach einem der vorhergehenden Ansprüche, dadurch gekennzeichnet, daß die Kanäle (4) unter einem Winkel von etwa bis zu 15° in Richtung auf die Zufuhrseite des Öl-Luft-Gemisches hin geneigt sind.

8. Versorgungssystem nach einem der vorhergehenden Ansprüche, dadurch gekennzeichnet, daß das Pumpenrad (1) eine über die radialen Kanäle (4) hinausragende scheibenartige Rückwand (5) aufweist, die an ihrem Außenumfang eine Antriebsverzahnung (3) aufweist.

9. Versorgungssystem nach einem der vorhergehenden Ansprüche, dadurch gekennzeichnet, daß der von der ringförmigen Packung (6) eingeschlossene zylindrische Innenmantel eine Luftaustrittsfläche von mindestens 20% des Querschnitts der Hohlwelle (2) aufweist.

## Claims

1. A supply system for bearings, shafts and like consumers of a gas turbine propulsion unit, particularly a supply system with an oil circuit for a gas turbine jet propulsion unit of aircraft, wherein a fluid such as oil is fed to a consumer of the propulsion unit, the extracted air/oil mixture being fed to an oil/air separator in which the mixture is fed radially inwardly through associated radial ports (4) of a pump impeller (1), the oil being deposited on the impeller (1) by centrifugal force and returned into the circuit, wherein the impeller (1) is, in a central zone, in communication with a hollow shaft (2) on the venting side, characterised in that in the central zone of the impeller (1) there is a porous air-permeable packing (6) with a surface area which is large in proportion to the packing volume and which is vented on the inside via the hollow shaft (2) and which on the outside communicates with a collecting space (10) of the impeller (1) via a drum-like surrounding wall (8) comprising apertures (7) which are large in relation to the porosity of the packing and in which discharge the radial ports (4) by which the oil separated out of the oil/air mixture being carried towards the packing (6) is centrifuged out from the surfce of the surrounding wall and the packing and returned out of the ports.

2. A supply system according to Claim 1, characterised in that the packing is of annular construction and has a central free air outlet surface (15) substantially in the form of a cylindrical inner shell which is connected to the venting passage of the hollow shaft (2).

3. A supply system according to Claim 1 or 2, characterised in that the packing (6) consists of a material which is sponge-like and permeable to air and which is only held axially by fitments inside the hollow shaft (2).

4. A supply system according to one of the preceding Claims, characterised in that the surrounding wall (8) around the packing (6) has apertures (7) which constitute a total free through-flow cross-section of at least one third the entire surface area of the part.

5. A supply system according to one of the preceding Claims, characterised in that the collecting space (10) constructed in the impeller (1) has a greater volume than the packing (6).

6. A supply system according to one of the preceding Claims, characterised in that the ports (4) are, with regard to the relevant port length and its proportion to the outer radius, constructed in the ratio of 1:2 or less.

7. A supply system according to one of the preceding Claims, characterised in that the ports (4) are inclined at an angle of substantially up to 15° in the direction of the feed side of the oil/air mixture.

8. A supply system according to one of the preceding Claims, characterised in that the impeller (1) has, projecting beyond the radial ports (4), a disclike rear wall (5) which comprises a driving tooth system (3) on its outer periphery.

9. A supply system according to one of the preceding Claims, characterised in that the cylindrical inner shell enclosed by the annular packing (6) has an air outlet area of at least 20% of the cross-section of the hollow shaft (2).

**Revendications**

1. Dispositif d'alimentation de paliers, arbres et endroits semblables d'utilisation d'un moteur de turbine à gaz, en particulier dispositif d'alimentation par un circuit d'huile pour un réacteur de turbine à gaz d'avions, dans lequel un fluide, comme l'huile, est amené à une partie utilisatrice du moteur, dans lequel un mélange huile-air aspiré est amené à un séparateur huile-air dans lequel le mélange est introduit radialement vers l'intérieur par des canaux radiaux (4) d'une roue de pompe (1) et l'huile est séparée dans la roue de pompe (1) par la force centrifuge et ramenée en circuit, la roue de pompe (1) étant en communication dans une zone centrale avec un arbre creux (2) du côté évacuation d'air, caractérisé en ce que dans la zone centrale de la roue de pompe (1) une garniture poreuse (6), perméable à l'air est disposée avec une grande surface en relation au volume de garniture, surface qui est mise à l'atmosphère sur sa face intérieure par l'arbre creux (2), et qui est liée par sa face extérieure avec un espace collecteur (10) de la roue de pompe (1) par une paroi enveloppe (8) de type tambour contenant de grandes ouvertures (7) en relation avec la porosité de la garniture, dans lequel espace débouchent les canaux radiaux, par lesquels l'huile séparée du mélange huile-air amené contre la garniture (6) est centrifugée de la surface enveloppe et de la garniture vers l'extérieur et reconduite hors de canaux.

2. Dispositif d'alimentation selon la revendication 1, caractérisé en ce que la garniture (6) est réalisée en forme d'anneau et est en communication avec le canal d'évacuation d'air de l'arbre creux (2) par une surface centrale libre pour la sortie de l'air (15) essentiellement sous forme d'une enveloppe intérieure cylindrique.

3. Dispositif d'alimentation selon les revendications 1 ou 2, caractérisé en ce que la garniture (6) est composée d'un matériau, qui est poreux et perméable à l'air et est maintenue simplement axialement par encastrement dans l'arbre creux (2).

4. Dispositif d'alimentation selon une des revendications précédentes caractérisé en ce que la paroi enveloppe (8) entourant la garniture (6) est réalisée avec des ouvertures (7) constituant une section de passage libre totale d'au moins un tiers de la surface totale de cette pièce.

5. Dispositif d'alimentation selon une des revendications précédentes, caractérisé en ce que l'espace collecteur (10) réalisé dans la roue de pompe (1) présente un volume plus grand que la garniture (6).

6. Dispositif d'alimentation selon une des revendications précédentes, caractérisé en ce que les canaux (4) sont réalisés concernant leur longueur respective par rapport au diamètre extérieur dans le rapport de 1:2 ou plus petit.

7. Dispositif d'alimentation selon une des revendications précédentes, caractérisé en ce que les canaux (4) sont inclinés d'un angle pouvant atteindre 15° en direction du côté d'alimentation du mélange huile-air.

8. Dispositif d'alimentation selon une des revendications précédentes, caractérisé en ce que la roue de pompe (1) comprend une paroi arrière de type disque, dépassant au-dessus des canaux radiaux (4) et qui possède sur son pourtour extérieur un engrenage moteur (3).

9. Dispositif selon une des revendications précédentes, caractérisé en ce que l'enveloppe intérieure cylindrique enfermée par la garniture annulaire (6) comprend une surface de sortie d'air d'au moins 20 % de la section transversale de l'arbre creux (2).

FIG.1

FIG. 2

FIG. 3b

FIG. 3a

FIG. 4b

FIG. 4a